# EUROPÄISCHE PATENTANMELDUNG

(11) **EP 4 717 834 A1**
(43) Veröffentlichungstag der Anmeldung: **01.04.2026**
(21) Anmeldenummer: 25195926.8
(22) Anmeldetag: 14.08.2025
(51) Int. Cl.: E03C 1/00, E03B 1/00, F24D 17/00, F28D 21/00

(54) **WÄRMERÜCKGEWINNUNGSEINRICHTUNG FÜR EINE SANITÄREINRICHTUNG UND SANITÄREINRICHTUNG MIT EINER WÄRMERÜCKGEWINNUNGSEINRICHTUNG**

(30) Priorität: 27.09.2024 DE 102024128113
(71) Anmelder: Grohe AG, 58675 Hemer (DE)
(72) Erfinder: FINKELDEI, Thilo, 58675 Hemer (DE); RUEBESAMEN, Paul, 59872 Meschede (DE); JUNG, Andreas, 58730 Froendenberg (DE)

(57) **Zusammenfassung**

Wärmerückgewinnungseinrichtung (1) für eine Sanitäreinrichtung (2), zumindest aufweisend:
- eine Zuführleitung (3) zum Zuführen einer Flüssigkeit hin zu einer Abgabeeinrichtung (4) der Sanitäreinrichtung (2),
- eine Abflusseinrichtung (5), umfassend
∘ ein Gehäuse (6) mit einem Becken (7), dem die Flüssigkeit über die Abgabeeinrichtung (4) zuführbar ist;
∘ einen Abfluss (8) für die Flüssigkeit;
∘ einen Verschluss (9) für den Abfluss (8), der zwischen einer Offenstellung (10), in der die Flüssigkeit über den Abfluss (8) aus dem Becken (7) in eine Abflussleitung (11) abfließen kann, und einer Schließstellung (12), in der sich die Flüssigkeit in dem Becken (7) staut und somit ein Flüssigkeitsreservoir (13) ausbildet, verstellbar ist und wobei der Verschluss (9) eine Überlauföffnung (14) für die Flüssigkeit aufweist; und
∘ eine Ansaugstelle (15), über die die Flüssigkeit aus dem Flüssigkeitsreservoir (13) abführbar ist.

Zudem wird eine Sanitäreinrichtung (2) mit einer solchen Wärmerückgewinnungseinrichtung (1) vorgeschlagen.

## Beschreibung

Die vorliegende Erfindung betrifft eine Wärmerückgewinnungseinrichtung für eine Sanitäreinrichtung und eine Sanitäreinrichtung mit einer Wärmerückgewinnungseinrichtung, wobei die Sanitäreinrichtung insbesondere durch Personen in Sanitärräumen, wie zum Beispiel Badezimmern, zum Duschen, Baden und/oder zur Körperpflege verwendbar ist.

Bei der Verwendung von Sanitäreinrichtungen, wie zum Beispiel Duschen oder Badewannen, kann ein hoher Energieverbrauch durch die Bereitstellung von erwärmter Flüssigkeit entstehen. Auch aus diesem Grund sind Sanitäreinrichtungen bekannt, bei denen die Wärmeenergie des warme Brauchwassers, das z. B während des Duschens anfällt, über Wärmerückgewinnungssysteme weiter genutzt wird. Dabei wird die (Rest-)Wärmeenergie des Wassers genutzt, um die Vorlauftemperatur des kalten Frischwassers anzuheben. Demzufolge wird weniger Energie für die Warmwasserbereitung aufgewendet, da das Warmwasser um ein geringeres Temperaturdelta erhitzt werden muss.

Um solche Systeme aufzubauen wird eine Pumpe benötig, die das Abwasser durch eine Wärmetauschereinrichtung pumpt. Dafür wird wiederum eine Ansaugstelle in einem Reservoir benötigt, die von der Ablaufeinheit direkt in der Dusche bereitgestellt werden kann. Das Reservoir (und der Betrieb der Wärmerückgewinnungseinrichtung) wird aber nur benötigt, wenn tatsächlich jemand duscht, d. h. den Großteil der Zeit steht das Wasser still im Reservoir (Stagnation) und bietet aufgrund von Seifenresten und menschlichen Abscheidungen (Schweiß, Körperfett, Hautschüppchen) einen geeigneten Nährboden für Bakterien. Es ist also unhygienisch das Abwasser im Reservoir zu speichern.

Aufgabe der Erfindung ist es daher, die mit Bezug auf den Stand der Technik geschilderten Probleme zumindest teilweise zu lösen und insbesondere eine Wärmerückgewinnungseinrichtung anzugeben, die ein Anstauen der Flüssigkeit zur Bildung eines Wasserreservoirs ermöglicht, wobei aber eine dauerhafte Ausbildung des Flüssigkeitsreservoirs vermieden werden soll. Zudem soll eine Sanitäreinrichtung mit einer Wärmerückgewinnungseinrichtung angegeben werden.

Diese Aufgaben werden gelöst mit einer Wärmerückgewinnungseinrichtung und einer Sanitäreinrichtung gemäß den Merkmalen der unabhängigen Patentansprüche. Weitere vorteilhafte Ausgestaltungen der Erfindung sind in den abhängigen Patentansprüchen angegeben. Es ist darauf hinzuweisen, dass die in den abhängigen Patentansprüchen einzeln aufgeführten Merkmale in beliebiger technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt eine Wärmerückgewinnungseinrichtung für eine Sanitäreinrichtung bei, die zumindest Folgendes aufweist:
- eine Zuführleitung zum Zuführen einer Flüssigkeit hin zu einer Abgabeeinrichtung der Sanitäreinrichtung,
- eine Abflusseinrichtung, zumindest umfassend
   ∘ ein Gehäuse mit einem Becken, dem die Flüssigkeit über die Abgabeeinrichtung zuführbar ist;
   ∘ einen Abfluss für die Flüssigkeit;
   ∘ einen Verschluss für den Abfluss, der zwischen einer Offenstellung, in der die Flüssigkeit über den Abfluss aus dem Becken in eine Abflussleitung abfließen kann, und einer Schließstellung, in der sich die Flüssigkeit in dem Becken staut und somit ein Flüssigkeitsreservoir ausbildet, verstellbar ist und wobei der Verschluss eine Überlauföffnung für die Flüssigkeit aufweist;
   ∘ eine Ansaugstelle, über die die Flüssigkeit aus dem Reservoir abführbar ist;
- eine Pumpe, über die die Flüssigkeit aus dem Flüssigkeitsreservoir über die Ansaugstelle ansaugbar ist; und
- einen Wärmetauscher zum Austausch von Wärme zwischen der aus der Ansaugstelle abgesaugten Flüssigkeit und der durch die Zuführleitung geführten Flüssigkeit.

Bei der Sanitäreinrichtung handelt es sich insbesondere um eine Einrichtung zur Körperhygiene einer Person. Hierzu kann die Sanitäreinrichtung beispielsweise nach Art einer Dusche oder Badewanne ausgebildet und/oder in einem Sanitärraum, wie zum Beispiel einem Badezimmer, angeordnet sein. Zudem kann die Sanitäreinrichtung für therapeutische Anwendungen dienen. Die Sanitäreinrichtung weist zumindest eine Abgabeeinrichtung für eine Flüssigkeit auf. Bei der zumindest einen Abgabeeinrichtung kann es sich insbesondere um eine Brause, Kopfbrause, Handbrause, Düse und/oder Auslauföffnung handeln. Durch die zumindest eine Abgabeeinrichtung ist eine Flüssigkeit, beispielsweise Wasser, insbesondere in (mindestens) ein Sanitärbecken, in eine Auffangeinrichtung, in eine Duschtasse und/oder auf einen Boden der Sanitäreinrichtung abgebbar, aus der Flüssigkeit in die Abflusseinrichtung strömen kann.

Die Wärmerückgewinnungseinrichtung umfasst zumindest eine Zuführleitung und eine Abflusseinrichtung. Die Zuführleitung ist insbesondere zumindest für Frischwasser bzw. Mischwasser vorgesehen. Z. B. umfasst die Sanitäreinrichtung insbesondere einen Thermostat (in einer einfachsten Ausführung eine Mischeinrichtung ohne eigene Temperaturregelung), durch das ein Warmwasser und ein Kaltwasser zu einem temperierten Mischwasser mischbar sind. Das Warmwasser und das Kaltwasser sind jeweils Frischwasser und können durch das Thermostat zu Mischwasser mit einer gewünschten Mischwassertemperatur mischbar sein. Eine Warmwassertemperatur des Warmwassers kann insbesondere maximal 90 °C (Grad Celsius), bevorzugt 25 °C bis 90 °C, besonders bevorzugt 55 °C bis 65 °C, und/oder eine Kaltwassertemperatur des Kaltwassers insbesondere maximal 25 °C (Celsius), bevorzugt 1 °C bis 25 °C, besonders bevorzugt 5 °C bis 20 °C betragen. Die gewünschte Temperatur der über die Abgabeeinrichtung abgegebenen Flüssigkeit kann beispielsweise 30 °C bis 50 °C, bevorzugt 35 °C bis 45 °C, besonders bevorzugt 35 °C bis 40 °C, betragen.

Als Zuführleitung kann insbesondere jede Leitung angesehen werden, die zum Zuführen einer Flüssigkeit hin zu der Abgabeeinrichtung der Sanitäreinrichtung vorgesehen ist, also insbesondere eine Kaltwasserleitung, ggf. aber auch die Mischwasserleitung oder die Warmwasserleitung.

Die Abflusseinrichtung umfasst ein Gehäuse, das zumindest teilweise aus Kunststoff und/oder Metall bestehen kann. Die Abflusseinrichtung bzw. das Gehäuse ist insbesondere zumindest teilweise in eine Wand der Sanitäreinrichtung, in einen Boden der Sanitäreinrichtung, in eine Gebäudewand eines Gebäudes und/oder in einen Gebäudeboden des Gebäudes einbaubar. In dem Gehäuse ist ein Becken ausgebildet, dem die Flüssigkeit von der Sanitäreinrichtung zuführbar ist. Das Gehäuse kann eine Einlassöffnung aufweisen, über die die Flüssigkeit von der Sanitäreinrichtung in das Becken strömen kann. Die Einlassöffnung kann beispielsweise in einer Seitenwand des Gehäuses ausgebildet sein. Die Einlassöffnung kann beispielsweise rechteckförmig, quadratisch oder rund ausgebildet sein. Das Gehäuse und/oder die Einlassöffnung können zumindest teilweise auf Höhe und/oder unterhalb des (mindestens) einen Sanitärbeckens, der Auffangeinrichtung, der Duschtasse und/oder des Bodens der Sanitäreinrichtung angeordnet sein. Dem Becken ist die Flüssigkeit von der Sanitäreinrichtung insbesondere (nur) durch Schwerkraft zuführbar. Das Gehäuse und/oder das Becken können einen Zulauf für Frischwasser aufweisen, sodass das Becken insbesondere zumindest teilweise mit dem Frischwasser spülbar ist.

Die Abflusseinrichtung umfasst einen Abfluss für die Flüssigkeit. Der Abfluss ist insbesondere in einem Beckenboden des Beckens ausgebildet. Bei dem Abfluss kann es sich um eine Abflussöffnung in dem Becken und/oder dem Gehäuse handeln. Über den Abfluss ist die Flüssigkeit insbesondere einer Kanalisation zuführbar. An den Abfluss ist eine Abflussleitung, beispielsweise nach Art einer Rohrleitung, angeschlossen. Über die Abflussleitung kann die Flüssigkeit der Kanalisation zugeführt werden. Der Abfluss kann beispielsweise einen Durchmesser von 10 mm [Millimeter] bis 200 mm aufweisen.

Die Abflusseinrichtung weist einen Verschluss für den Abfluss auf. Der Verschluss ist zwischen einer Offenstellung und einer Schließstellung verstellbar. In der Offenstellung des Verschlusses kann die Flüssigkeit insbesondere vollständig aus dem Becken in die Kanalisation abfließen, sodass diese sich in dem Becken insbesondere nicht staut. In der Schließstellung des Verschlusses ist die Flüssigkeit in dem Becken staubar, so dass sich ein Flüssigkeitsreservoir ausbildet. Der Verschluss weist eine Überlauföffnung für die Flüssigkeit auf.

Die Wärmerückgewinnungseinrichtung umfasst weiter eine Pumpe, über die die Flüssigkeit aus dem Flüssigkeitsreservoir über die Ansaugstelle ansaugbar ist.

Die Wärmerückgewinnungseinrichtung umfasst weiter einen Wärmetauscher zum Austausch von Wärme zwischen der aus der Ansaugstelle abgesaugten Flüssigkeit und der durch die Zuführleitung geführten Flüssigkeit.

Die in dem Becken (durch den in der Schließstellung angeordneten Verschluss) angestaute Flüssigkeit kann, beispielsweise mithilfe einer (elektrischen oder anders betriebenen) Pumpe, über die Ansaugstelle angesaugt und damit hin zum Wärmetauscher gefördert werden. Hierzu kann das Becken beispielsweise über eine Wärmetauscherleitung mit der Abgabeeinrichtung verbindbar bzw. verbunden sein, so dass die Flüssigkeit mittels der Pumpe durch die Wärmetauscherleitung förderbar ist bzw. gefördert wird. Insbesondere ist die Wärmetauscherleitung mit der Abflussleitung verbunden, so dass die über die Ansaugstelle angesaugte und über den Wärmetauscher geleitete Flüssigkeit dann hin zur Kanalisation leitbar ist bzw. geleitet wird.

Das Gehäuse und/oder das Becken können insbesondere einen Pumpenanschluss für die Pumpe und/oder einen Leitungsanschluss für die Wärmetauscherleitung aufweisen.

Der Verschluss weist eine Überlauföffnung für die Flüssigkeit auf. Über die Überlauföffnung kann die Flüssigkeit in der Schließstellung des Verschlusses bei Überschreiten einer maximalen Stauhöhe der Flüssigkeit in dem Becken aus dem Becken abfließen. Hierdurch ist ein Rückfließen der Flüssigkeit aus der Einlassöffnung des Gehäuses und/oder ein Rückstauen der Flüssigkeit bis zu der Sanitäreinrichtung verhinderbar. Die Überlauföffnung ist in der Schließstellung des Verschlusses unterhalb der Einlassöffnung bzw. unterhalb einer Einlaufkante der Einlassöffnung angeordnet. Das Becken kann (insbesondere bei Erreichen der maximalen Stauhöhe) eine Aufnahmekapazität für die Flüssigkeit von beispielsweise 1 l [Liter] bis 10 I aufweisen. Die maximale Stauhöhe in dem Becken kann (insbesondere von dem Beckenboden und/oder in einer senkrechten Richtung) beispielsweise 10 mm bis 100 mm betragen. Die Flüssigkeit kann über die Überlauföffnung insbesondere (ungehindert) in den Abfluss abfließen.

Der Wärmetauscher kann in bekannter Weise ausgeführt sein. Insbesondere ermöglicht der Wärmetauscher einen möglichst effizienten Wärmeübergang zwischen der Flüssigkeit, die durch die Wärmetauscherleitung gefördert wird, und der Flüssigkeit, die hin zu der Abgabeeinrichtung gefördert wird. Insbesondere werden also die Wärmetauscherleitung und die Kaltwasserleitung über den Wärmetauscher geführt, so dass stromaufwärts des Wärmetauschers ein möglichst großes Temperaturdelta zwischen beiden Flüssigkeiten und stromabwärts ein möglichst geringes Temperaturdelta zwischen beiden Flüssigkeiten vorliegt. Die beiden Flüssigkeiten sind insbesondere strömungstechnisch voneinander getrennt.

Insbesondere kann durch die Pumpe ein Fluidstrom gefördert werden, der insbesondere dem aus der Abgabeeinrichtung austretendem bzw. dem in das Becken eintretendem Fluidstrom entspricht. Insbesondere strömt also in dem Betrieb der Pumpe möglichst keine Flüssigkeit über die Überlauföffnung hin zum Abfluss, so dass ein möglichst großer Anteil der Wärme des Brauchwassers zum Erwärmen des (durch die Zuführleitung strömenden) Frischwassers verwendet werden kann.

Insbesondere ist zwischen dem Flüssigkeitsreservoir und der Ansaugstelle eine Filtervorrichtung angeordnet. Mit der Filtervorrichtung können insbesondere in der Flüssigkeit enthaltende Verunreinigungen zurückgehalten werden, so dass diese möglichst nicht über die Pumpe angesaugt bzw. durch die Wärmetauscherleitung hindurch gefördert werden. Die Verunreinigungen können insbesondere in der Offenstellung des Verschlusses aus dem Becken abgeführt werden, ggf. aber auch in der Schließstellung über die Überlauföffnung.

Insbesondere ist die Ansaugstelle über eine Wärmetauscherleitung mit der Abflussleitung verbunden, so dass die aus dem Flüssigkeitsreservoir über die Ansaugstelle abgeführte Flüssigkeit über den Wärmetauscher hin zur Abflussleitung leitbar ist.

Insbesondere ist die (durch den Wärmetauscher geführte) Zuführleitung eine Kaltwasserleitung der Sanitäreinrichtung.

Insbesondere kann die Wärmerückgewinnungseinrichtung einen Temperatursensor umfassen. Anhand einer von dem Temperatursensor gemessenen Temperatur der von der Abgabeeinrichtung abgegebenen Flüssigkeit ist insbesondere ein Betrieb der Pumpe regelbar. Der Temperatursensor kann also insbesondere an der Zuführleitung, insbesondere stromabwärts des Wärmetauschers bzw. stromabwärts einer Zusammenführung einer Kaltwasserleitung mit einer Warmwasserleitung angeordnet sein. Insbesondere kann der Temperatursensor auch als ein Teil der Sanitäreinrichtung ausgeführt sein, der z. B. zur Regelung der über die Abgabeeinrichtung abgegebenen Flüssigkeit verwendet wird. Insbesondere kann der Temperatursensor auch in dem Becken angeordnet sein.

Insbesondere kann durch den Temperatursensor bzw. anhand der davon gemessenen Werte der Temperatur der Betrieb des Verschlusses (also der Wechsel zwischen der Offen- und der Schließstellung) und/oder der Betrieb der Pumpe (an/aus) geregelt werden. Insbesondere wird also nur dann Flüssigkeit in dem Flüssigkeitsreservoir angestaut bzw. über die Pumpe aus dem Flüssigkeitsreservoir angesaugt, wenn ein Mindestdelta der Temperatur an dem Wärmetauscher vorliegt (also zwischen den Flüssigkeiten, die durch die Wärmetauscherleitung und durch die Zuführleitung strömen).

Der Verschluss kann zumindest teilweise rohrförmig ausgebildet sein. Beispielsweise kann der Verschluss zumindest teilweise nach Art eines hohlen Zylinders, eines (unten offenen) Topfs und/oder eines Stopfens ausgebildet sein. Der Verschluss kann sich, insbesondere entlang einer (beispielsweise geraden) Längsachse, von einem ersten längsseitigen Ende zu einem zweiten längsseitigen Ende erstrecken. Der Verschluss kann (insbesondere parallel zu der Längsachse und/oder in einer senkrechten Richtung) eine Länge von beispielsweise 10 mm bis 100 mm [Millimeter] aufweisen. Der Verschluss kann (insbesondere orthogonal zu der Längsachse, in einer horizontalen Richtung und/oder an dem zweiten längsseitigen Ende) einen Innendurchmesser von beispielsweise 8 mm bis 98 mm und/oder einen Außendurchmesser von beispielsweise 10 mm bis 100 mm aufweisen.

Der Verschluss kann in der Schließstellung mit seinem ersten längsseitigen Ende auf dem Abfluss angeordnet sein. Hierdurch kann die Flüssigkeit insbesondere nur über die Überlauföffnung des Verschlusses aus dem Becken in den Abfluss abfließen.

Der Verschluss kann an seinem ersten längsseitigen Ende eine Dichtung aufweisen. Die Dichtung kann zumindest teilweise aus einem elastischen Material, wie zum Beispiel Gummi, bestehen. In der Schließstellung des Verschlusses kann die Dichtung insbesondere auf dem Beckenboden des Beckens aufliegen. Durch die Dichtung ist in der Schließstellung des Verschlusses insbesondere ein Spalt zwischen dem Verschluss und dem Beckenboden des Beckens abdichtbar.

Die Überlauföffnung kann an einem zweiten längsseitigen Ende des Verschlusses ausgebildet sein. Das zweite längsseitige Ende des Verschlusses kann in der Schließstellung des Verschlusses eine Überlaufkante für die Flüssigkeit bilden. Von der Überlauföffnung kann die Flüssigkeit insbesondere durch den Verschluss und/oder durch das erste längsseitige Ende des Verschlusses in den Abfluss strömen.

Die Abflusseinrichtung kann einen Antrieb für den Verschluss aufweisen. Mithilfe des Antriebs ist der Verschluss insbesondere zwischen der Offenstellung und Schließstellung, insbesondere parallel zu der Längsachse, verstellbar. Bei dem Antrieb kann es sich beispielsweise um einen Elektromotor, einen Linearantrieb, und/oder Servomotor handeln. Der Antrieb kann beispielsweise durch eine Steuerung der Abflusseinrichtung, insbesondere automatisch, steuerbar sein. Die Steuerung kann beispielsweise zumindest einen Mikroprozessor umfassen.

Insbesondere weist die Sanitäreinrichtung und/oder die Wärmerückgewinnungseinrichtung eine Steuerungseinrichtung auf, durch die z. B. der Verschluss und/oder die Pumpe betreibbar bzw. regelbar sind.

Einem weiteren Aspekt folgend wird auch eine Sanitäreinrichtung vorgeschlagen, die zumindest Folgendes aufweist:
- eine Abgabeeinrichtung zur Abgabe einer Flüssigkeit; und
- eine hier beschriebene Wärmerückgewinnungseinrichtung, über die die der Abgabeeinrichtung zugeführte Flüssigkeit erwärmbar ist.

Bei der Sanitäreinrichtung handelt es sich insbesondere um die Dusche oder Badewanne. Für weitere Einzelheiten zu der Sanitäreinrichtung wird vollumfänglich auf die Beschreibung der Abflusseinrichtung verwiesen.

Die Erfindung sowie das technische Umfeld werden nachfolgend anhand der Figuren näher erläutert. Es ist darauf hinzuweisen, dass die Figuren bevorzugte Ausführungsvarianten der Erfindung zeigen, diese jedoch nicht darauf beschränkt ist. Dabei sind gleiche Bauteile in den Figuren mit denselben Bezugszeichen versehen. Es zeigen beispielhaft und schematisch:
- Fig. 1:: eine Sanitäreinrichtung mit einer Wärmetauschereinrichtung in einer perspektivischen Darstellung;
- Fig. 2:: eine Abflusseinrichtung der Sanitäreinrichtung mit einem Verschluss in einer Schließstellung in einer perspektivischen Darstellung;
- Fig. 3:: die Abflusseinrichtung mit dem Verschluss in der Schließstellung in einem Querschnitt;
- Fig. 4:: die Abflusseinrichtung mit dem Verschluss in einer Offenstellung in einer perspektivischen Darstellung; und
- Fig. 5:: die Abflusseinrichtung mit dem Verschluss in der Offenstellung in einem Querschnitt.

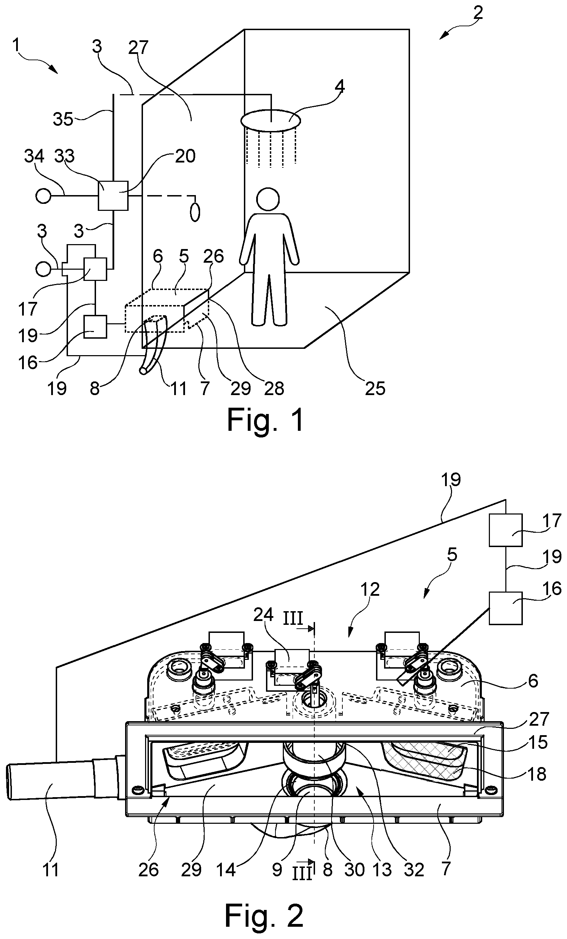

Die Fig. 1 zeigt eine Sanitäreinrichtung 2 nach Art einer Dusche mit einer Wärmetauschereinrichtung 1 in einer perspektivischen Darstellung. Die Sanitäreinrichtung 2 umfasst eine Abgabeeinrichtung 4 zur Abgabe einer Flüssigkeit in Form einer Brause. Die Flüssigkeit fließt nach ihrer Abgabe über einen Boden 25 in eine Einlassöffnung 26 einer Abflusseinrichtung 5, durch die die Flüssigkeit über eine Abflussleitung 11 einer hier nicht gezeigten Kanalisation zuführbar. Die Abflusseinrichtung 5 ist in einer Seitenwand 27 der Sanitäreinrichtung 2 angeordnet.

Die Wärmerückgewinnungseinrichtung 1 umfasst eine Zuführleitung 3 und die Abflusseinrichtung 5. Die Zuführleitung 3 ist zumindest für Frischwasser bzw. Mischwasser vorgesehen. Die Sanitäreinrichtung 2 umfasst einen Thermostat 33, durch das ein über eine Warmwasserleitung 34 zugeführtes Warmwasser und ein über eine Zuführleitung 3 zugeführtes Kaltwasser zu einem temperierten Mischwasser 35 mischbar sind.

Die Wärmerückgewinnungseinrichtung 1 umfasst weiter eine Pumpe 16, über die die Flüssigkeit aus der Abflusseinrichtung 5 ansaugbar ist. Die Wärmerückgewinnungseinrichtung 1 umfasst weiter einen Wärmetauscher 17 zum Austausch von Wärme zwischen der aus der Abflusseinrichtung 5 abgesaugten Flüssigkeit und der durch die Zuführleitung 3 geführten Flüssigkeit. Die durch den Wärmetauscher 17 hindurch geführte Zuführleitung 3 ist eine Kaltwasserleitung der Sanitäreinrichtung 2.

Die in dem Becken 7 der der Abflusseinrichtung 5 (durch den in der Schließstellung angeordneten Verschluss 9) angestaute Flüssigkeit kann mithilfe der Pumpe 16 angesaugt und damit hin zum Wärmetauscher 17 gefördert werden. Hierzu ist das Becken 7 der Abflusseinrichtung 5 über eine Wärmetauscherleitung 19 mit der Abgabeeinrichtung 4 verbunden, so dass die Flüssigkeit mittels der Pumpe 16 durch die Wärmetauscherleitung 19 gefördert wird. Die Wärmetauscherleitung 19 ist mit der Abflussleitung 11 verbunden, so dass die aus der Abflusseinrichtung 5 angesaugte und über den Wärmetauscher 17 geleitete Flüssigkeit dann hin zur Kanalisation leitbar ist bzw. geleitet wird.

Die Fig. 2 zeigt die Abflusseinrichtung 5 der in der Fig. 1 gezeigten Sanitäreinrichtung 2 in einer perspektivischen Darstellung. Die Abflusseinrichtung 5 weist ein Gehäuse 6 auf, wobei die Einlassöffnung 26 für die Flüssigkeit in einer Seitenwand 27 des Gehäuses 6 ausgebildet ist. Die Flüssigkeit kann über eine Einlaufkante 28 der Einlassöffnung 26 in ein Becken 7 des Gehäuses 6 strömen. Ein Beckenboden 29 des Beckens 7 weist einen Abfluss 8 auf, über den die Flüssigkeit aus dem Becken 7 der Kanalisation zuführbar ist. Die Abflusseinrichtung 5 umfasst einen Verschluss 9, der sich in der Fig. 1 in einer Schließstellung 12 befindet.

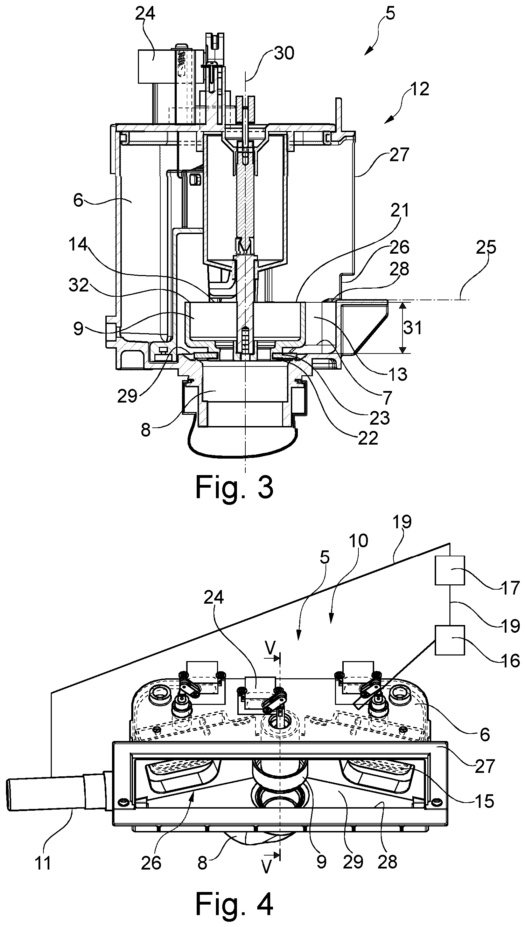

Die Fig. 3 zeigt die Abflusseinrichtung 5 mit dem Verschluss 9 in der Schließstellung 12 in einem Querschnitt entlang der in der Fig. 2 gezeigten Schnittebene III-III. Der Verschluss 9 ist rohrförmig ausgebildet und erstreckt sich entlang einer Längsachse 30 von einem ersten längsseitigen Ende 21 zu einem zweiten längsseitigen Ende 22. Der Verschluss 9 weist an dem ersten längsseitigen Ende 21 eine ringförmige Dichtung 23 auf, mit der der Verschluss 9 in der Schließstellung 12 auf dem Abfluss 8 sitzt. Hierdurch kann sich die Flüssigkeit in dem Becken 7 stauen, bis dass die Flüssigkeit in dem Becken 7 eine maximale Stauhöhe 31 erreicht.

Beim Überschreiten der maximalen Stauhöhe 31 strömt die Flüssigkeit über eine Überlaufkante 32 des Verschlusses 9 in eine Überlauföffnung 14 des Verschlusses 9. Die Überlaufkante 32 und die Überlauföffnung 14 sind an dem zweiten längsseitigen Ende 22 des Verschlusses 9 ausgebildet. Die Überlaufkante 32 und die Überlauföffnung 14 befinden sich (in einem betriebsbereiten Zustand der Abflusseinrichtung 5 und/oder in der Schließstellung 12 des Verschlusses 9) unterhalb der Einlaufkante 28 der Einlassöffnung 26 des Gehäuses 6, sodass die Flüssigkeit von dem Becken 7 nicht aus der Einlassöffnung 26 herausströmen kann. Das erste längsseitige Ende 21 des Verschlusses 9 ist offen, sodass die über die Überlauföffnung 14 in den Verschluss 9 strömende Flüssigkeit durch den Verschluss 9 und/oder über das erste längsseitige Ende 21 des Verschlusses 9 in den Abfluss 8 abfließen kann.

Die Fig. 4 zeigt die Abflusseinrichtung 5 in einer perspektivischen Darstellung, nachdem der Verschluss 9 durch einen Antrieb 24 in eine Offenstellung 10 verstellt wurde.

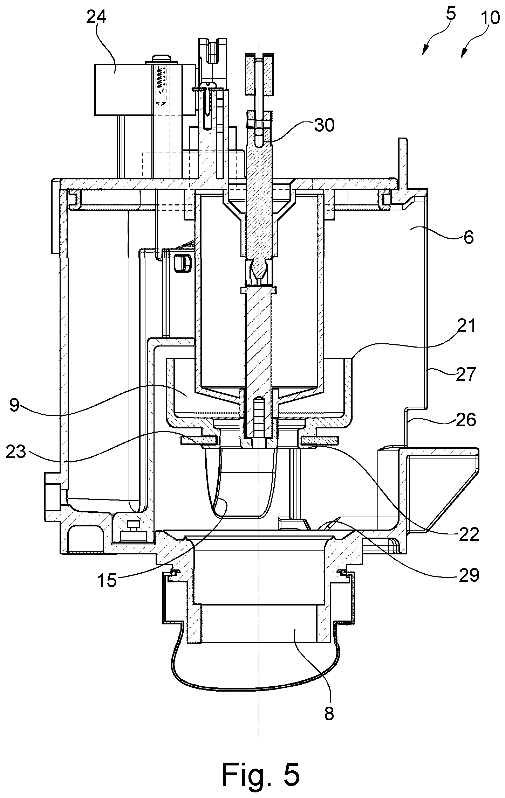

Die Fig. 5 zeigt die Abflusseinrichtung 5 mit dem Verschluss 9 in der Offenstellung 10 in einem Querschnitt entlang der in der Fig. 4 gezeigten Schnittebene V-V. In der Offenstellung 10 ist das erste längsseitige Ende 21 des Verschlusses 9 von dem Abfluss 8 abgehoben, sodass die Flüssigkeit aus dem Becken 7 direkt über den Abfluss 8 aus dem Becken 7 ausströmen kann und sich nicht in dem Becken 7 staut. Die Abflusseinrichtung 5 befindet sich daher in der Fig. 4 und 5 in einem Ablaufbetriebsmodus. Der Verschluss 9 ist mit dem Antrieb 24 verbunden, sodass der Verschluss 9 durch den Antrieb 24 parallel zu der Längsachse 30 zwischen der Offenstellung 10 und der in den Fig. 2 und 3 gezeigten Schließstellung 12 verstellbar ist.

Im Folgenden wird auf die Fig. 1 bis 5 Bezug genommen. Auf den bisherigen Vortrag wird verwiesen.

Der Verschluss 9 für den Abfluss 8 ist zwischen einer Offenstellung 10, in der die Flüssigkeit über den Abfluss 8 aus dem Becken 7 in eine Abflussleitung 11 abfließen kann, und einer Schließstellung 12, in der sich die Flüssigkeit in dem Becken 7 staut und somit ein Flüssigkeitsreservoir 13 ausbildet, verstellbar. Der Verschluss 9 weist eine Überlauföffnung 14 für die Flüssigkeit auf.

Die Abflusseinrichtung 5 weist weiter eine Ansaugstelle 15 auf, über die die Flüssigkeit aus dem Flüssigkeitsreservoir 13 abführbar ist. Die Wärmerückgewinnungseinrichtung 1 umfasst eine Pumpe 16, über die die Flüssigkeit aus dem Flüssigkeitsreservoir 13 über die Ansaugstelle 15 ansaugbar ist. Die Wärmerückgewinnungseinrichtung 1 umfasst weiter einen Wärmetauscher 17 zum Austausch von Wärme zwischen der aus der Ansaugstelle 15 abgesaugten Flüssigkeit und der durch die Zuführleitung 3 geführten Flüssigkeit.

Die in dem Becken 7 (durch den in der Schließstellung 12 angeordneten Verschluss 9) angestaute Flüssigkeit kann mit der Pumpe 16 über die Ansaugstelle 15 angesaugt und damit hin zum Wärmetauscher 17 gefördert werden. Hierzu ist das Becken 7 über eine Wärmetauscherleitung 19 mit der Abgabeeinrichtung 4 verbunden, so dass die Flüssigkeit mittels der Pumpe 16 durch die Wärmetauscherleitung 19 gefördert wird. Die Wärmetauscherleitung 19 ist mit der Abflussleitung 11 verbunden, so dass die über die Ansaugstelle 15 angesaugte und über den Wärmetauscher 17 geleitete Flüssigkeit dann hin zur Kanalisation leitbar ist bzw. geleitet wird.

Zwischen dem Flüssigkeitsreservoir 13 und der Ansaugstelle 15 ist eine Filtervorrichtung 18 (ein Sieb) angeordnet. Mit der Filtervorrichtung 18 können in der Flüssigkeit enthaltende Verunreinigungen zurückgehalten werden, so dass diese möglichst nicht über die Pumpe 16 angesaugt bzw. durch die Wärmetauscherleitung 19 hindurch gefördert werden. Die Verunreinigungen können in der Offenstellung 10 des Verschlusses 9 aus dem Becken 7 abgeführt werden, ggf. aber auch in der Schließstellung 12 über die Überlauföffnung 14.

Die Wärmerückgewinnungseinrichtung 1 umfasst einen Temperatursensor 20. Anhand einer von dem Temperatursensor 20 gemessenen Temperatur der von der Abgabeeinrichtung 4 abgegebenen Flüssigkeit ist ein Betrieb der Pumpe 16 regelbar. Der Temperatursensor 20 ist als ein Teil der Sanitäreinrichtung 2 ausgeführt, hier als Teil des Thermostaten 33, der z. B. zur Regelung der über die Abgabeeinrichtung 4 abgegebenen Flüssigkeit verwendet wird.

Durch den Temperatursensor 20 bzw. anhand der davon gemessenen Werte der Temperatur wird der Betrieb des Verschlusses 9 (also der Wechsel zwischen der Offen- und der Schließstellung 10, 12) geregelt werden. Es wird also nur dann Flüssigkeit in dem Flüssigkeitsreservoir 13 angestaut bzw. über die Pumpe 16 aus dem Flüssigkeitsreservoir 13 angesaugt, wenn ein Mindestdelta der Temperatur an dem Wärmetauscher 17 vorliegt (also zwischen den Flüssigkeit, die durch die Wärmetauscherleitung 19 und durch die Zuführleitung 3 strömen).

### Bezugszeichenliste

- 1: Wärmerückgewinnungseinrichtung
- 2: Sanitäreinrichtung
- 3: Zuführleitung
- 4: Abgabeeinrichtung
- 5: Abflusseinrichtung
- 6: Gehäuse
- 7: Becken
- 8: Abfluss
- 9: Verschluss
- 10: Offenstellung
- 11: Abflussleitung
- 12: Schließstellung
- 13: Flüssigkeitsreservoir
- 14: Überlauföffnung
- 15: Ansaugstelle
- 16: Pumpe
- 17: Wärmetauscher
- 18: Filtervorrichtung
- 19: Wärmetauscherleitung
- 20: Temperatursensor
- 21: erstes längsseitiges Ende
- 22: zweites längsseitiges Ende
- 23: Dichtung
- 24: Antrieb
- 25: Boden
- 26: Einlassöffnung
- 27: Seitenwand
- 28: Einlaufkante
- 29: Beckenboden
- 30: Längsachse
- 31: Stauhöhe
- 32: Überlaufkante
- 33: Thermostat
- 34: Warmwasserleitung
- 35: Mischwasser

## Patentansprüche

1. Wärmerückgewinnungseinrichtung (1) für eine Sanitäreinrichtung (2), zumindest aufweisend:
- eine Zuführleitung (3) zum Zuführen einer Flüssigkeit hin zu einer Abgabeeinrichtung (4) der Sanitäreinrichtung (2),
- eine Abflusseinrichtung (5), umfassend
∘ ein Gehäuse (6) mit einem Becken (7), dem die Flüssigkeit über die Abgabeeinrichtung (4) zuführbar ist;
∘ einen Abfluss (8) für die Flüssigkeit;
∘ einen Verschluss (9) für den Abfluss (8), der zwischen einer Offenstellung (10), in der die Flüssigkeit über den Abfluss (8) aus dem Becken (7) in eine Abflussleitung (11) abfließen kann, und einer Schließstellung (12), in der sich die Flüssigkeit in dem Becken (7) staut und somit ein Flüssigkeitsreservoir (13) ausbildet, verstellbar ist und wobei der Verschluss (9) eine Überlauföffnung (14) für die Flüssigkeit aufweist; und
∘ eine Ansaugstelle (15), über die die Flüssigkeit aus dem Flüssigkeitsreservoir (13) abführbar ist;
- eine Pumpe (16), über die die Flüssigkeit aus dem Flüssigkeitsreservoir (13) über die Ansaugstelle (15) ansaugbar ist; und
- einen Wärmetauscher (17) zum Austausch von Wärme zwischen der aus der Ansaugstelle (15) abgesaugten Flüssigkeit und der durch die Zuführleitung (3) geführten Flüssigkeit.

2. Wärmerückgewinnungseinrichtung (1) nach Patentanspruch 1, wobei zwischen dem Flüssigkeitsreservoir (13) und der Ansaugstelle (15) eine Filtervorrichtung (18) angeordnet ist.

3. Wärmerückgewinnungseinrichtung (1) nach einem der vorhergehenden Patentansprüche, wobei die Ansaugstelle (15) über eine Wärmetauscherleitung (19) mit der Abflussleitung (11) verbunden ist, so dass die aus dem Flüssigkeitsreservoir (13) über die Ansaugstelle (15) abgeführte Flüssigkeit über den Wärmetauscher (17) hin zur Abflussleitung (11) leitbar ist.

4. Wärmerückgewinnungseinrichtung (1) nach einem der vorhergehenden Patentansprüche, wobei die Zuführleitung (3) eine Kaltwasserleitung der Sanitäreinrichtung (2) ist.

5. Wärmerückgewinnungseinrichtung (1) nach einem der vorhergehenden Patentansprüche, umfassend einen Temperatursensor (20), wobei anhand einer von dem Temperatursensor (20) gemessenen Temperatur der von der Abgabeeinrichtung (4) abgegebenen Flüssigkeit ein Betrieb der Pumpe (16) regelbar ist.

6. Sanitäreinrichtung (2), zumindest aufweisend:
- eine Abgabeeinrichtung (4) zur Abgabe einer Flüssigkeit; und
- eine Wärmerückgewinnungseinrichtung (1) nach einem der vorhergehenden Patentansprüche, über die die der Abgabeeinrichtung (4) zugeführte Flüssigkeit erwärmbar ist.
